# EUROPÄISCHE PATENTSCHRIFT

(11) **EP 2 121 161 B1**
(45) Veröffentlichungstag und Bekanntmachung des Hinweises auf die Patenterteilung: **16.03.2011**
(21) Anmeldenummer: 08708518.9
(22) Anmeldetag: 31.01.2008
(51) Int. Cl.: B01D 29/96, B01D 35/30

(54) **FILTERANORDNUNG**
FILTER ARRANGEMENT
AGENCEMENT DE FILTRE

(30) Priorität: 12.02.2007 DE 102007006772
(43) Veröffentlichungstag der Anmeldung: 25.11.2009
(73) Patentinhaber: Robert Bosch GmbH, 70442 Stuttgart (DE)
(72) Erfinder: BEYER, Martin, 71672 Marbach (DE); BREIDERT, Joachim, 71701 Schwieberdingen (DE); BRAUN, Hans-Peter, 72172 Renfrizhausen (DE); WETTEMANN-DEL CHIN, Wolfgang, 71739 Oberriexingen (DE); SEITZ, Ansgar, 73765 Neuhausen (DE)
(86) Internationale Anmeldenummer: PCT/EP2008/051207
(87) Internationale Veröffentlichungsnummer: WO 2008/098844

(56) Entgegenhaltungen:
- EP-A- 1 353 059
- DE-A1- 19 605 952
- US-B1- 6 253 738
- US-B1- 6 533 931

## Beschreibung

### Stand der Technik

Die Erfindung geht aus von einer Filteranordnung nach der Gattung des Hauptanspruchs.

Es ist schon ein Filter und eine Filteranordnung aus der DE 195 81 421 B4 bekannt, wobei der Filter an seinem Außenumfang zumindest eine Rastnase zur Rastverbindung mit einem Rastmittel einer Halterung aufweist. Die Halterung ist Teil eines Fördermoduls. Nachteilig ist, dass das in dem Fördermodul angeordnete Filter nur aufwendig austauschbar ist, da die Rastverbindung von ihrer Zugänglichkeit her schwierig zu lösen ist. Die Halterung für den Filter weist ein Rastmittel auf, in das die Rastnase einrastet und das als Aussparung ausgebildet ist. Nachteilig ist, dass die Rastverbindung, wenn überhaupt, nur schwer lösbar ist, da die Rastnase nur schwierig aus der Aussparung heraus bewegbar ist. Sollte dies mit einem Werkzeug versucht werden, muss nach der Lage der Rastverbindung gesucht werden. Dass das Werkzeug an der richtigen Stelle der Rastverbindung angreift, um diese zu entriegeln, ist unsicher. Die Gefahr einer Beschädigung der Halterung durch das Werkzeug ist hoch, wodurch das gesamte Fördermodul ausgetauscht werden müsste.

Aus der DE 196 05 952 A1 ist die Befestigung eines Filtergehäuses an einer Halterung mittels Verrastung bekannt, wobei ein Austausch des Filtergehäuses möglich ist.

In der US 6 533 931 B1 ist eine Rastverbindung für ein Filtergehäuse offenbart. Beim Recyceln der Filteranordnung kann die Rastverbindung durch teilweises Wegschneiden der Rastnasen geöffnet werden, um das Filtergehäuse und die Filterpatrone getrennt voneinander wiederverwerten zu können.

### Vorteile der Erfindung

Die erfindungsgemäße Filteranordnung mit den Merkmalen des Hauptanspruchs hat demgegenüber den Vorteil, dass das Filter in der Filteranordnung leicht austauschbar ist, indem die zumindest eine Rastnase zwischen zwei Längsrippen angeordnet ist und zumindest ein Demontagewerkzeug vorgesehen ist, das mit seinen Abmessungen in eine durch die Längsrippen und die Rastnase gebildete Vertiefung einsetzbar ist. Auf diese Weise kann das Demontagewerkzeug durch die Längsrippen seitlich geführt bis an die Rastnase bewegt und die Rastverbindung sicher gelöst werden.

Das Rastmittel ist als elastisch federnder Rasthaken ausgebildet ist, da dies eine besonders einfache und kostengünstig herzustellende Ausführungsform mit lösbarer Rastverbindung ist.

Durch die in den Unteransprüchen aufgeführten Maßnahmen sind vorteilhafte Weiterbildungen und Verbesserungen der im Hauptanspruch angegebenen Filteranordnung möglich.

Besonders vorteilhaft ist, wenn die Vertiefung in axialer Richtung bezüglich einer Filterachse durch die Rastnase und eine Schulter begrenzt ist, da das Demontagewerkzeug auf diese Weise in axialer Richtung fixiert ist und sicher in seiner vorbestimmten Entriegelungsposition gehalten wird.

Gemäß einer vorteilhaften Ausführung ist das Demontagewerkzeug streifenförmig ausgebildet. Durch die flache Ausbildung gelangt das Demontagewerkzeug besonders einfach zu der nicht direkt zugänglichen Rastverbindung.

Sehr vorteilhaft ist es, dass das Demontagewerkzeug an zumindest einem Ende eine Dicke aufweist, die mindestenes der Höhe der Rastnase entspricht. Durch das Einschieben eines solchen Demontagewerkzeugs in die Vertiefung wird das Rastelement in radialer Richtung über die Rastnase hinaus angehoben, so dass der Filter in axialer Richtung über das Rastelement hinweg bewegt werden kann.

Auch vorteilhaft ist, wenn der Abstand zwischen der Rastnase und der Schulter des Filtergehäuses in etwa der Länge des Demontagewerkzeugs entspricht, da die Lage des Demontagewerkzeugs auf diese Weise in axialer Richtung bezüglich der Filterachse festgelegt ist.

Desweiteren vorteilhaft ist, wenn der Abstand zwischen den Längsrippen in etwa der Breite des Demontagewerkzeugs entspricht, da die Lage des Demontagewerkzeugs auf diese Weise in Umfangsrichtung des Filters festgelegt ist.

Außerdem vorteilhaft ist, wenn das Rastmittel der Halterung derart ausgebildet ist, dass es in einen zwischen der Halterung und dem Filtergehäuse vorgesehenen Spalt vorsteht, da das Demontagewerkzeug auf diese Weise das Rastmittel nach radial außen verdrängen und somit lösen kann.

Ein Ausführungsbeispiel der Erfindung ist in der Zeichnung vereinfacht dargestellt und in der nachfolgenden Beschreibung näher erläutert.
- Fig.1: zeigt im Schnitt eine vereinfacht dargestellte Vorrichtung zum Fördern von Kraftstoff mit einer Filteranordnung,
- Fig.2: eine dreidimensionale Ansicht des erfindungsgemäßen Filtergehäuses mit einem Demontagewerkzeug und
- Fig.3: einen Ausschnitt der erfindungsgemäßen Filteranordnung nach Fig.1.

### Beschreibung des Ausführungsbeispiels

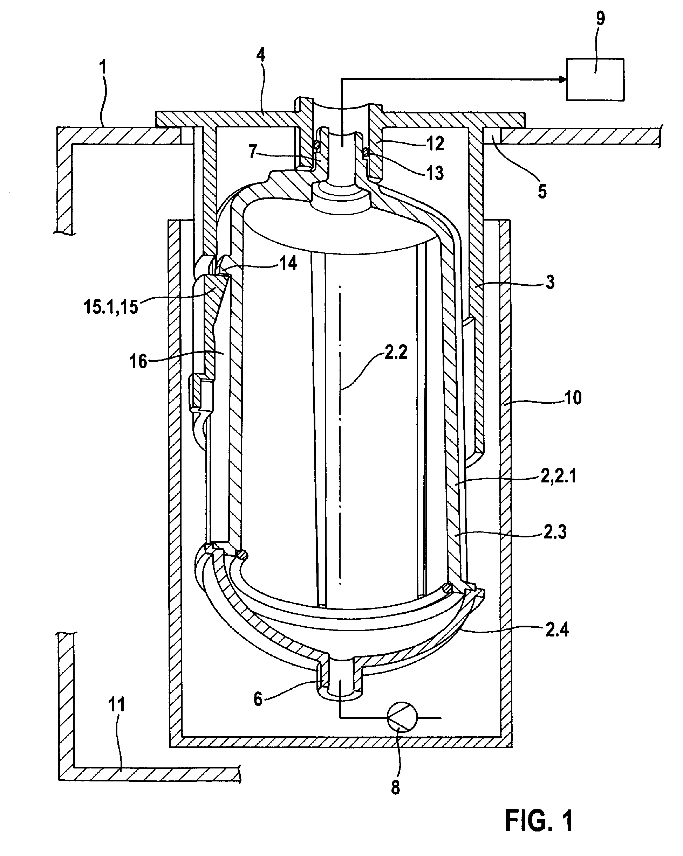

Fig.1 zeigt im Schnitt eine vereinfacht dargestellte Vorrichtung zum Fördern von Kraftstoff mit einer Filteranordnung.

Die Vorrichtung zum Fördern von Kraftstoff ist in einem Vorratsbehälter 1 angeordnet und weist eine Filteranordnung bestehend aus einem Filter 2 mit Filtergehäuse 2.1 und einer Halterung 3 für das Filter 2 auf. Das Filtergehäuse 2.1 enthält ein nicht dargestelltes Filtermedium, das im Kraftstoff enthaltene Partikel herausfiltert. Die Halterung 3 ist beispielsweise an einem Tankflansch 4 vorgesehen, der eine Öffnung 5 des Vorratsbehälters 1 dicht verschließt und durch die die Vorrichtung zum Fördern von Kraftstoff in den Vorratsbehälter 1 eingeführt wird.

Es ist ein Förderaggregat 8 vorgesehen, das Kraftstoff aus dem Vorratsbehälter 1 ansaugt und über den Filter 2 zu einer Brennkraftmaschine 9 fördert. Beispielsweise ist das Förderaggregat 8 in einem im Vorratsbehälter 1 vorgesehenen Speicherbehälter 10 angeordnet. Der Speicherbehälter 10 ist an einem Tankboden 11 des Vorratsbehälters 1 angeordnet und dient dazu, ausreichend Kraftstoff um das Förderaggregat 8 herum zu bevorraten, damit dieses auch bei niedrigen Füllständen im Vorratsbehälter 1 und beim Beschleunigen, Bremsen, Kurven- und/oder Bergfahren Kraftstoff ansaugen kann. Der Speicherbehälter 10 ist beispielsweise topfförmig ausgebildet und wird mit Kraftstoff aus dem Vorratsbehälter 1 befüllt, beispielsweise auf bekannte Art und Weise mittels einer nicht dargestellten Saugstrahlpumpe.

Das Filtergehäuse 2.1 reicht abschnittsweise in die beispielsweise hülsen- oder ringförmige Halterung 3 hinein und ist mittels zumindest einer lösbaren Rast- bzw Schnappverbindung in dieser fixiert. Beispielsweise sind drei Rast- bzw Schnappverbindungen vorgesehen. Die Rastverbindung ist beispielsweise gebildet durch eine am Filtergehäuse 2.1 vorgesehene Rastnase 14, die mit einem an der Halterung 3 vorgesehenen hakenförmigen Rastmittel 15 zusammenwirkt. Die Rastnase 14 könnte aber auch durch eine am Filtergehäuse 2.1 vorgesehene beliebige Hinterschneidung, Aussparung oder Vertiefung gebildet sein, die mit einem an der Halterung 3 vorgesehenen hakenförmigen oder kugelförmigen Rastmittel 15 zusammenwirkt.

Der Filter 2 kann mit seiner dem Tankflansch 4 zugewandten Stirnseite maximal bis an einen Stutzen 12 des Tankflansches 4 in die Halterung 3 eingeschoben werden. Der Filter 2 weist einen Eingang 6 und einen Ausgang 7 auf, wobei der Ausgang 7 im eingebauten Zustand in den Stutzen 12 hineinragt und zwischen dem Stutzen 12 und dem Ausgang 7 ein Dichtelement 13 vorgesehen ist. Der Stutzen 12 kann auch ein auf andere Art und Weise ausgebildeter Anschlag sein, der einen Kanal zur Strömungsverbindung mit der Brennkraftmaschine 9 aufweist.

Das beispielsweise zylinderförmige Filtergehäuse 2.1 mit einer Filterachse 2.2 ist konzentrisch zu der Halterung 3 angeordnet, wobei zwischen der Halterung 3 und dem Filtergehäuse 2.1 ein ringförmiger Spalt 16 vorgesehen ist. Das Filtergehäuse 2 hat beispielsweise einen topfförmigen Abschnitt 2.3 und einen deckelförmigen Abschnitt 2.4, die miteinander fest verbunden, beispielsweise verschweisst, sind. Der topfförmige Abschnitt 2.3 hat seinem dem deckelförmigen Abschnitt 2.4 zugewandten Abschnitt 2.4 eine ringförmige Schulter 17.

Um das Filter 2 auszutauschen, muß der Tankflansch 4 mit dem daran gelagerten Filter 2 aus dem Vorratsbehälter 1 herausgenommen werden. Anschließend muss die zumindest eine Rastverbindung durch das Einschieben jeweils eines Demontagewerkzeugs 19 in den Spalt 16 gelöst, der alte Filter 2 aus der Halterung 3 genommen und der neue Filter in die Halterung 3 eingesetzt werden.

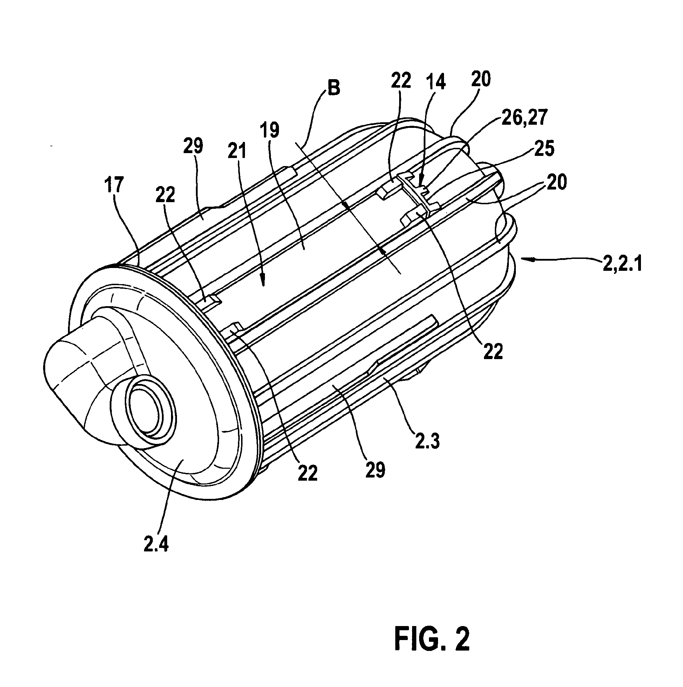

Fig.2 zeigt eine dreidimensionale Ansicht des erfindungsgemäßen Filtergehäuses mit einem Demontagewerkzeug.

Bei dem Filtergehäuse nach Fig.2 sind die gegenüber der Vorrichtung nach Fig.1 gleichbleibenden oder gleichwirkenden Teile durch die gleichen Bezugszeichen gekennzeichnet.

Erfindungsgemäß ist vorgesehen, dass die zumindest eine Rastnase 14 zwischen zwei Längsrippen 20 des Filtergehäuses 2.1 angeordnet ist und zumindest ein Demontagewerkzeug 19 vorgesehen ist, das mit seinen Abmessungen in eine durch die Längsrippen 20 und die Rastnase 14 gebildete Vertiefung 21 einsetzbar ist. Das Demontagewerkzeug 19 kann durch die erfindungsgemäßen Längsrippen 20 seitlich geführt bis an die Rastnase 14 bewegt werden. Auf diese Weise wird die Rastverbindung definiert gelöst.

Die Längsrippen 20 sind am Außenumfang des Filtergehäuses 2.1 angeordnet und verlaufen in axialer Richtung bezüglich der Filterachse 2.2.

Die Vertiefung 21 ist in axialer Richtung bezüglich einer Filterachse 2.2 durch die Rastnase 14 und die Schulter 17 und in Umfangsrichtung durch die Längsrippen 20 begrenzt.

Das Demontagewerkzeug 21 ist flach und beispielsweise streifenförmig ausgebildet. Auf diese Weise lässt es sich besonders einfach über den Spalt 16 in die Vertiefung 21 einführen. Das Demontagewerkzeug 21 ist beispielsweise aus Kunststoff hergestellt und spritzgegossen. Das Demontagewerkzeug 21 weist an zumindest einem Ende eine Dicke D auf, die mindestens der Höhe Hr der Rastnase 14 und in etwa der Höhe des Spaltmaßes des Spalts 16 entspricht und kann das Rastmittel 15 auf diese Weise beim Einschieben in die Vertiefung 21 in radialer Richtung bis zumindest auf Höhe der Rastnase 14 anheben und damit entriegeln. Die vorbestimmte Dicke D des Demontagewerkzeugs 21 wird beispielsweise erreicht, indem an seinen beiden Enden zumindest eine Erhöhung, Verdickung oder Wulst 22 vorgesehen ist. Das Demontagewerkzeug 21 könnte aber auch über seine gesamte Länge die vorbestimmte Dicke D haben. Die Länge L des Demontagewerkzeugs 19 entspricht in etwa dem Abstand zwischen der Rastnase 14 und der Schulter 17. Die Breite B des Demontagewerkzeugs 19 entspricht in etwa dem Abstand zwischen den Längsrippen 20. Auf diese Weise ist das Demontagewerkzeug 19 in einer vorbestimmten Lage fixiert, die eine Entriegelung der entsprechenden Rastverbindung garantiert und eine Verschiebung des Demontagewerkzeugs 19 innerhalb der Vertiefung 21 verhindert.

Die in radialer Richtung bezüglich der Filterachse 2.2 gemessene Höhe Hr der Rastnase 14 übersteigt beispielsweise die Höhe der Längsrippen 20.

Die Rastnase 14 ist beispielsweise aus einem quer zu den Längsrippen 20 verlaufenden Quersteg 25 und mindestens einem in Richtung der Längsrippen 20 verlaufenden Längssteg 26 gebildet. Die Längsstege 26 weisen jeweils eine Schräge 27 auf.

Für die Filteranordnung ist eine Verdrehsicherung vorgesehen, die ein Verdrehen des in der Halterung 3 befindlichen und/oder verrasteten Filters 2 um die Filterachse 2.2 verhindert und ein derartiges Drehmoment aufnehmen kann. Auf diese Weise werden Drehbewegungen des Filtergehäuses 2.1 verhindert, so dass die Rastverbindung besser vor unbeabsichtigtem Lösen geschützt wird.

Die Verdrehsicherung ist beispielsweise gebildet durch am Außenumfang des Filters 2 angeordnete Rippen 29, die formschlüssig mit der Halterung 3 zusammenwirken. Die Rippen 29 führen den Filter 2 beim Einschieben in die Halterung 3 derart, dass der stutzenförmige Ausgang 7 des Filters 2 mit hoher Maßgenauigkeit und ohne zu verkanten oder anzuecken in den Stutzen 12 des Tankflansches 4 gelangt. Der Filter 2 ist derart ausgebildet, dass er mit seinen Rippen 29 nur in einer vorbestimmten Position in den Haltering 3 einführbar und einrastbar ist.

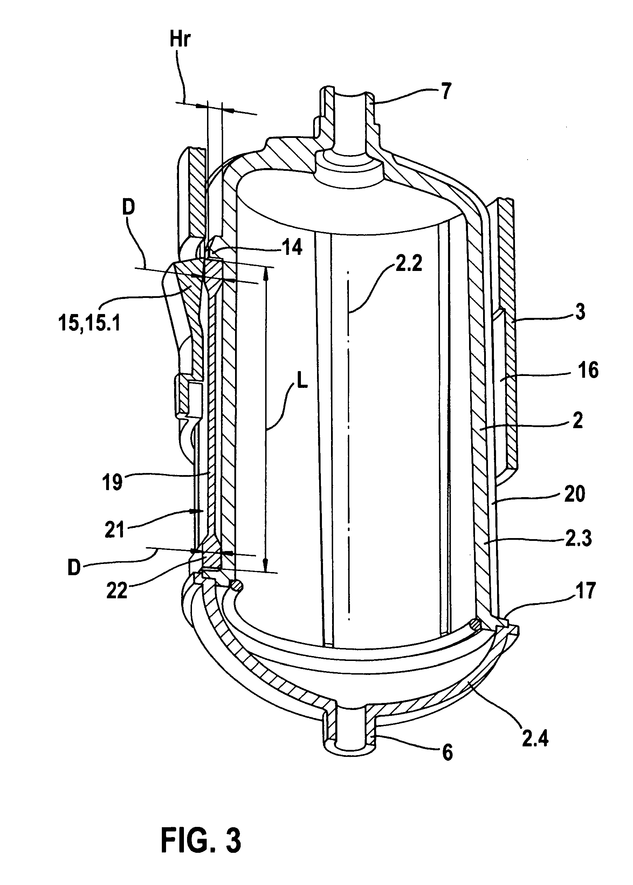

Fig.3 zeigt einen Ausschnitt der Vorrichtung nach Fig.1 mit dem in die Vertiefung des Filters eingesetzten Demontagewerkzeug.

Bei der Filteranordnung nach Fig.2 sind die gegenüber der Vorrichtung nach Fig.1 und Fig.2 gleichbleibenden oder gleichwirkenden Teile durch die gleichen Bezugszeichen gekennzeichnet.

Das Filtergehäuse 2.1 ragt mit einer vorbestimmten Länge aus der Halterung 3 heraus, derart, dass das Demontagewerkzeug 19 ohne starke Biegung in den Spalt 16 einführbar ist.

Das zumindest eine Rastmittel 15 der Halterung 3 ist derart ausgebildet, dass es in den Spalt 16 zwischen der Halterung 3 und dem Filter 2 vorsteht. Das Rastmittel 15 ist elastisch federnd ausgebildet und weist beispielsweise einen einseitig gelagerten Federschenkel 15.1 auf. Bei der Entriegelung durch das Demontagewerkzeug 19 wird der Federschenkel 15.1 des Rastmittels 15 radial nach außen gebogen und in der in Fig.3 gezeigten entriegelten Position gehalten. In dieser Position ist die Rastverbindung geöffnet, so dass das Filter 2 aus der Halterung 3 entnommen werden kann.

Für jede Rastverbindung der Filteranordnung ist ein separates Demontagewerkzeug vorgesehen. Bei drei Rastverbindungen müssen also drei Demontagewerkzeuge in ihre entsprechende Vertiefung 21 eingeschoben werden, um den Filter 2 aus der Halterung 3 herausnehmen zu können.

## Patentansprüche

1. Filteranordnung mit einem Filter (2), der ein Filtergehäuse (2.1) hat, das an seinem Außenumfang zumindest eine Rastnase (14) aufweist, und mit einer Halterung (3), in die der Filter (2) einsetzbar ist und die ein Rastmittel (15) zur Rastverbindung mit der Rastnase (14) des Filters (2) aufweist, wobei ein Demontagewerkzeug (19) zum Lösen der Rastverbindung vorgesehen ist, **dadurch gekennzeichnet, dass** das zumindest eine Rastmittel (15) der Halterung (3) als elastisch federnder Rasthaken derart ausgebildet ist, dass es in einen zwischen der Halterung (3) und dem Filtergehäuse (2.1) vorgesehenen Spalt (16) vorsteht, dass die zumindest eine Rastnase (14) des Filters (2) zwischen zwei am Außenumfang des Filters (2) vorgesehenen Längsrippen (20) angeordnet ist und dass das zumindest eine Demontagewerkzeug (19) mit seinen Abmessungen in eine durch die Längsrippen (20) und die Rastnase (14) gebildete Vertiefung (21) einsetzbar ist, wobei das Demontagewerkzeug (19) in der Vertiefung (21) durch die Längsrippen (20) seitlich geführt bis zur Rastnase (14) einführbar ist und durch seine axiale Bewegung das Rastmittel (15) in radialer Richtung bezüglich einer Filterachse (2.2) derart anhebt, dass die Rastverbindung entriegelt ist.

2. Filteranordnung nach Anspruch 1, **dadurch gekennzeichnet, dass** die Vertiefung (21) in axialer Richtung bezüglich einer Filterachse (2.2) durch die Rastnase (14) und eine Schulter (17) begrenzt ist.

3. Filteranordnung nach Anspruch 1, **dadurch gekennzeichnet, dass** das Demontagewerkzeug ( 19) streifenförmig ausgebildet ist.

4. Filteranordnung nach Anspruch 1, **dadurch gekennzeichnet, dass** das Demontagewerkzeug (19) an zumindest einem Ende eine Dicke (D) aufweist, die mindestens der Höhe (Hn) der Rastnase 14) entspricht.

5. Filteranordnung nach Anspruch 2, **dadurch gekennzeichnet, dass** der Abstand zwischen der Rastnase (14) und der Schulter (17) des Filtergehäuses (2.1) in etwa der Länge (L) des Demontagewerkzeugs (19) entspricht.

6. Filteranordnung nach Anspruch 1, **dadurch gekennzeichnet, dass** der Abstand zwischen den Längsrippen (20) in etwa der Breite (B) des Demontagewerkzeugs (19) entspricht.

7. Filteranordnung nach Anspruch 1, **dadurch gekennzeichnet, dass** das Spaltmaß des Spalts (16) in etwa der Höhe des Demontagewerkzeugs (19) entspricht.

## Claims

1. Filter arrangement having a filter (2) which has a filter housing (2.1) which has on its outer circumference at least one latching lug (14), and having a bracket (3) into which the filter (2) can be inserted and which has a latching means (15) for a latched connection to the latching lug (14) of the filter (2), with a dismounting tool (19) being provided for releasing the latched connection, **characterized in that** the at least one latching means (15) of the bracket (3) is designed as an elastically resilient latching hook such that it projects into a gap (16) provided between the bracket (3) and the filter housing (2.1), **in that** the at least one latching lug (14) of the filter (2) is arranged between two longitudinal ribs (20) provided on the outer circumference of the filter (2), and **in that** the at least one dismounting tool (19) can, with its dimensions, be inserted into a depression (21) formed by the longitudinal ribs (20) and the latching lug (14), wherein the dismounting tool (19) can be inserted into the depression (21), guided laterally by the longitudinal ribs (20), as far as the latching lug (14) and, by means of its axial movement, raises the latching means (15) in the radial direction with respect to a filter axis (2.2) such that the latching connection is unlocked.

2. Filter arrangement according to Claim 1, **characterized in that** the depression (21) is delimited in the axial direction with respect to a filter axis (2.2) by the latching lug (14) and a shoulder (17).

3. Filter arrangement according to Claim 1, **characterized in that** the dismounting tool (19) is of strip-shaped design.

4. Filter arrangement according to Claim 1, **characterized in that** the dismounting tool (19) has, at at least one end, a thickness (D) which corresponds at least to the height (Hn) of the latching lug (14).

5. Filter arrangement according to Claim 2, **characterized in that** the spacing between the latching lug (14) and the shoulder (17) of the filter housing (2.1) corresponds approximately to the length (L) of the dismounting tool (19).

6. Filter arrangement according to Claim 1, **characterized in that** the spacing between the longitudinal ribs (20) corresponds approximately to the width (B) of the dismounting tool (19).

7. Filter arrangement according to Claim 1, **characterized in that** the gap dimension of the gap (16) corresponds approximately to the height of the dismounting tool (19).

## Revendications

1. Agencement de filtre comprenant un filtre (2) qui présente un boîtier de filtre (2.1), qui présente sur sa périphérie extérieure au moins un nez d'encliquetage (14), et comprenant une fixation (3) dans laquelle le filtre (2) peut être inséré et qui présente un moyen d'encliquetage (15) pour la connexion par encliquetage au nez d'encliquetage (14) du filtre (2), un outil de démontage (19) étant prévu pour desserrer la connexion par encliquetage, **caractérisé en ce que** l'au moins un moyen d'encliquetage (15) de la fixation (3) est réalisé sous forme de crochet d'encliquetage à effet de ressort élastique de telle sorte qu'il fasse saillie dans une fente (16) prévue entre la fixation (3) et le boîtier de filtre (2.1), **en ce que** l'au moins un nez d'encliquetage (14) du filtre (2) est disposé entre deux nervures longitudinales (20) prévues sur la périphérie extérieure du filtre (2), et **en ce que** l'au moins un outil de démontage (19) avec ses dimensions, peut être inséré dans un renfoncement (21) formé par les nervures longitudinales (20) et le nez d'encliquetage (14), l'outil de démontage (19) dans le renfoncement (21) pouvant être inséré jusqu'au nez d'encliquetage (14) de manière guidée latéralement par les nervures longitudinales (20), et soulevant par son déplacement axial le moyen d'encliquetage (15) dans la direction radiale par rapport à un axe du filtre (2.2), de telle sorte que la connexion par encliquetage soit déverrouillée.

2. Agencement de filtre selon la revendication 1, **caractérisé en ce que** le renfoncement (21) est limité dans la direction axiale par rapport à un axe du filtre (2.2) par le nez d'encliquetage (14) et un épaulement (17).

3. Agencement de filtre selon la revendication 1, **caractérisé en ce que** l'outil de démontage (19) est réalisé en forme de ruban.

4. Agencement de filtre selon la revendication 1, **caractérisé en ce que** l'outil de démontage (19) présente, à au moins une extrémité, une épaisseur (D) qui correspond au moins à la hauteur (Hn) du nez d'encliquetage (14).

5. Agencement de filtre selon la revendication 2, **caractérisé en ce que** la distance entre le nez d'encliquetage (14) et l'épaulement (17) du boîtier de filtre (2.1) correspond approximativement à la longueur (L) de l'outil de démontage (19).

6. Agencement de filtre selon la revendication 1, **caractérisé en ce que** la distance entre les nervures longitudinales (20) correspond approximativement à la largeur (B) de l'outil de démontage (19).

7. Agencement de filtre selon la revendication 1, **caractérisé en ce que** la dimension de la fente (16) correspond approximativement à la hauteur de l'outil de démontage (19).
